# EUROPEAN PATENT SPECIFICATION

(11) **EP 4 110 146 B1**
(45) Date of publication and mention of the grant of the patent: **14.02.2024**
(21) Application number: 21836413.1
(22) Date of filing: 09.12.2021
(51) Int. Cl.: A47J 31/06, A47J 31/44

(54) **A TOOL FOR ADJUSTING THE AMOUNT OF POWDERED MATERIAL CONTAINED IN A VESSEL**
WERKZEUG ZUR EINSTELLUNG DER MENGE AN PULVERFÖRMIGEM MATERIAL IN EINEM BEHÄLTER
OUTIL POUR AJUSTER LA QUANTITÉ DE MATÉRIAU EN POUDRE CONTENU DANS UN RÉCIPIENT

(30) Priority: 29.12.2020 IT 202000032684
(43) Date of publication of application: 04.01.2023
(73) Proprietor: De'Longhi Appliances S.r.l., 31100 Treviso (IT)
(72) Inventor: ROSSETTO, Giovanni, 31100 Treviso (IT); CASASOLA, Maurizio, 31100 Treviso (IT)
(74) Representative: Rapisardi, Mariacristina
(86) International application number: PCT/EP2021/084920
(87) International publication number: WO 2022/144155

(56) References cited:
- WO-A1-2008/067590
- WO-A1-2015/131239
- WO-A1-2018/127676
- WO-A1-2019/078549

## Description

The present invention relates to a tool for adjusting the amount of powdered material contained in a vessel.

Tools for adjusting the amount of powdered materials in a vessel, typically coffee powder in a filter of a coffee brewing machine, have been on the market for some time.

It is known that in a manual coffee machine, with or without an integrated coffee grinder, the proper amount of coffee powder inside the filter ensures the amount and quality of coffee dispensed.

To properly fill the filter, a spoon or, if present, an integrated grinder can be used. After the filling process, the coffee powder must first be compacted and then the preparation by brewing process can be performed.

An excessive amount of coffee powder inside the filter after the pressing process causes the coffee machine to malfunction and the coffee would be dispensed with difficulty.

Manual tools are known and present on the market for removing excessive amounts of coffee powder in the filter: some tools have been developed for both professional and domestic coffee machines in order to ensure the uniform distribution of coffee powder inside the filter before the pressing process.

None of these tools known today ensures the proper amount inside the filter, obtainable only with the adjustment of the grinder in the case of a coffee machine with integrated grinder.

A similar concept has been developed for a domestic coffee machine: WO2008/067590 A1 illustrates a tool for controlling the amount of a particulate contained in a vessel.

Such tools are notoriously ineffective, as even this tool is not able to retain the excess coffee powder.

There is therefore a need to simplify the structure of the known tools for adjusting the amount of powdered material contained in a vessel.

The technical task which is proposed for the present invention is, therefore, to create a tool for adjusting the amount of powdered material contained in a vessel which makes it possible to eliminate the technical drawbacks complained of in the prior art.

As part of this technical task, an object of the invention is to create a tool for adjusting the amount of powdered material contained in a vessel which is capable of removing the excess coffee powder.

Another object of the invention is to create a tool for adjusting the amount of powdered material contained in a vessel which is capable of retaining the excess coffee powder.

Not least, an object of the invention is to create a tool for adjusting the amount of powdered material contained in a vessel which is simple and effective.

The technical task, as well as these and other objects, according to the present invention are reached by creating a tool for adjusting the amount of powdered material contained in a vessel, characterized in that it comprises a storage reservoir of an excess of powdered material contained in said vessel, a lower wall configured to be positioned inside said vessel, a side wall configured to rotatably support the tool resting on a peripheral edge of said vessel and to position said lower wall at a fixed or adjustable predetermined height inside said vessel, said lower wall having at least a first blade configured to pick up said excess of powdered material and at least one transfer passage for transferring at least most of said excess of powdered material picked up from said first blade towards said storage reservoir.

In one embodiment, the lower wall is circular and is configured to match with a cylindrical peripheral wall of the vessel.

In one embodiment the transfer passage is delimited by the cutting edge of the first blade.

In one embodiment the first blade extends radially.

In one embodiment, the storage reservoir, the lower wall, the side wall having the first blade and the transfer passage are made as a single hollow body.

In one embodiment, the tool for adjusting the amount of powdered material contained in a vessel has a second blade movable with respect to the first blade and configured to transfer to the storage reservoir any residual part of the excess of powdered material picked up from the first blade which has not been transferred to the storage reservoir.

In one embodiment the second blade is movable from and towards the first blade. In one embodiment, the second blade is configured to open and close the transfer passage.

In one embodiment, the second blade is rotatable with respect to the first blade around a central vertical axis of the tool.

Other features of the present invention are further defined in the following claims.

Further characteristics and advantages of the invention will more fully emerge from the description of a preferred but not exclusive embodiment of the tool for adjusting the amount of powdered material contained in a vessel according to the invention, illustrated by way of non-limiting indication in the accompanying drawings, in which:

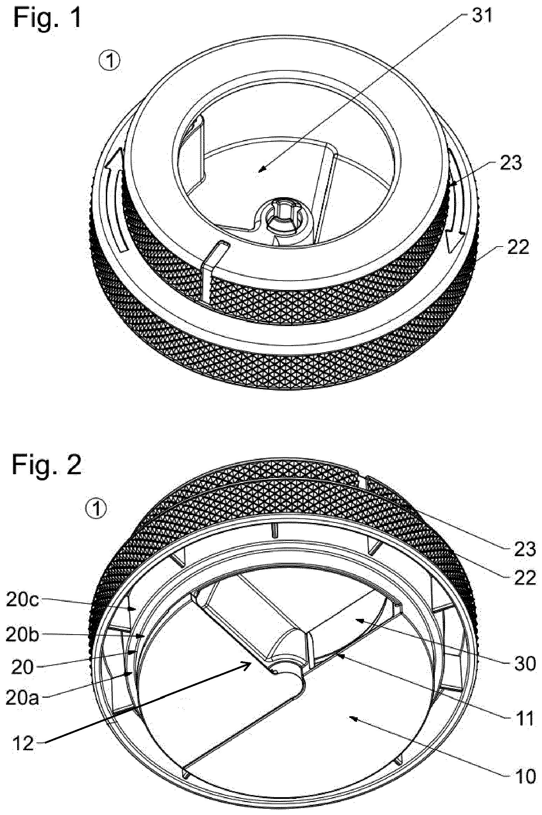

figure 1 shows a top view of the tool in the excess powder removal configuration;
figure 2 shows a bottom view of the tool in the excess powder removal configuration;

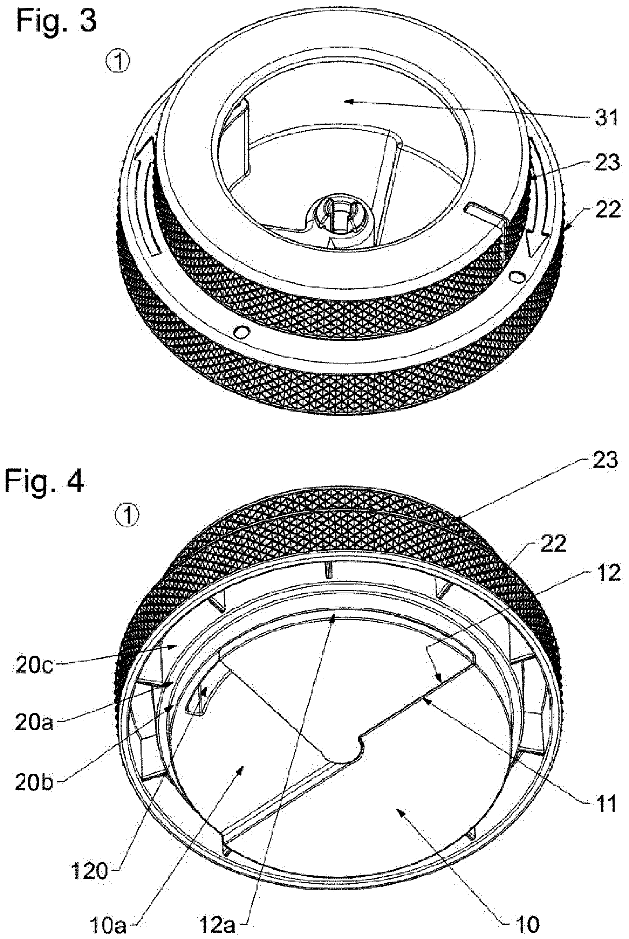

figure 3 shows a top view of the tool in the excess powder retention configuration;
figure 4 shows a bottom view of the tool in the excess powder retention configuration;

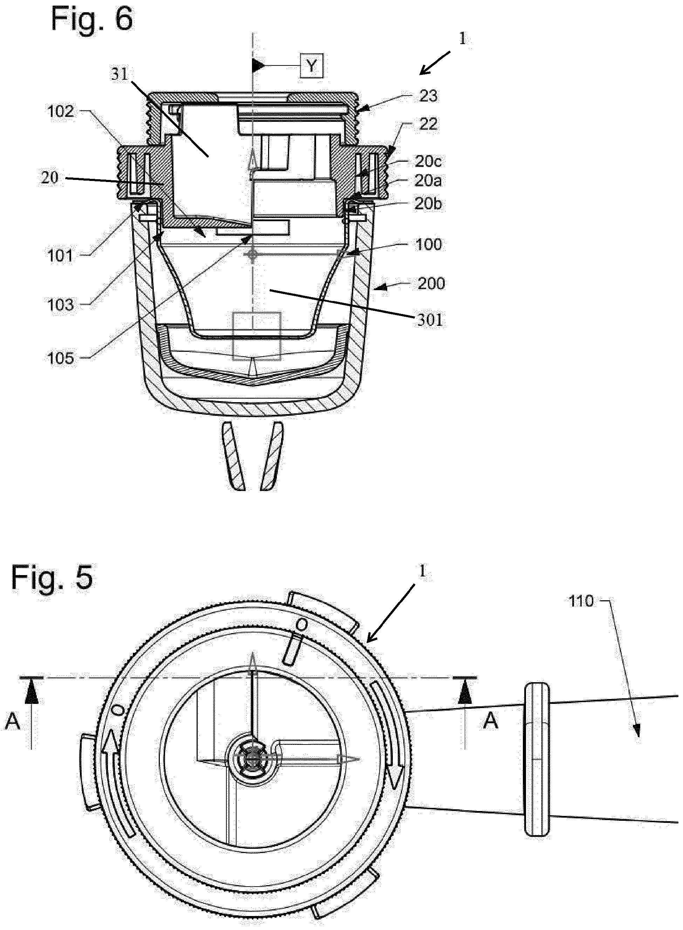

figure 5 shows a top plan view of the filter holder and filter assembly with the tool in the working position; and
figure 6 shows a section of the assembly of figure 5 according to the line A - A.

With reference to the aforesaid figures, a tool is shown for adjusting the amount of powdered material contained in a vessel, denoted in its entirety by the reference number 1.

Typically, the powdered material is coffee powder, the vessel is a filter housed in a filter holder engageable with the brewing head of a brewing unit mounted on a coffee machine (not shown).

In a known manner, the filter holder has a cup 200 where the filter 100 is housed and a handle 110 to be manipulated.

The tool 1 is of substantially conjugate shape with filter 100, typically circular with vertical axis Y coinciding with the coincident vertical axes of the filter 100 and cup 200 of the filter holder.

The tool 1 comprises a circular bottom wall 10 configured to be positioned inside the filter 100 and configured to match with a cylindrical peripheral wall 103 of the filter 100.

The tool 1 comprises a side wall 20 configured to rotatably support the tool 1 resting on a peripheral edge 101, particularly of an upper mouth 102 of the filter 100 by means of a shoulder 20a.

The side wall 20 has a cylindrical lower portion 20b of smaller diameter, a cylindrical upper portion 20c of larger diameter and an annular portion connecting the cylindrical lower portion 20b and the cylindrical upper portion 20c defining the shoulder 20a.

The side wall 20 externally has a first ring nut 22 rigidly connected to the side wall 20 itself and of an outer diameter preferably greater than that of the cup 200 of the filter holder.

Suitably, when the tool 1 is resting on the peripheral edge 101 of the filter 100, the lower wall 10 is positioned at a predetermined height inside the filter 100, visually highlighted by one or more marks 105 on the inner surface of the filter 100.

The lower wall 10 has at least a first blade 11 extending radially and is configured to pick up the excess of powdered material, and at least one transfer passage 30 for transferring towards a storage reservoir 31 at least most of the excess of powdered material 301 picked up by the first blade 11.

Advantageously, in fact, the tool 1 comprises a storage reservoir 31 for the excess of powdered material, suitably configured inside a single hollow body defined at least by the lower wall 10 and the side wall 20.

The hollow body is typically open at the top.

In a preferred embodiment, the transfer passage 30 is defined as an opening of an angular sector - typically 90°- of the lower wall 10 without interruption and delimited by the cutting edge of the first blade 11.

According to an innovative feature of the present invention, the tool 1 has a second blade 12 movable with respect to the first blade 11 and configured to transfer towards the storage reservoir 31 any residual part of the excess of powdered material picked up from the first blade 11 which has not been transferred to the storage reservoir 31.

Said second blade 12 is movable from and towards the first blade 11, and is rotatable with respect to the first blade 11 around the vertical axis Y of symmetry of the tool 1.

The second blade 12 is configured to open and close the transfer passage 30: typically, in the preferred embodiment, the second blade 12 has a shape conjugate to the angular sector of the transfer passage 30.

The second blade 12 is arranged coplanar to the first blade 11.

To this end, the lower wall 10 of the tool 1 has a lowered area 10a which accommodates the second blade 12 when it assumes the opening position of the passage 30.

Suitable control, connection and rotation means constrain the second blade 12 to a second ring nut 23 positioned externally rotationally free to the side wall 20, above the first ring nut 22 and with a smaller outer diameter than this.

The operation of the tool for adjusting the amount of powdered material contained in a vessel according to the invention appears clear from the description and illustration and, in particular, is substantially as follows.

The filter 100 is removably positioned in a filter holder 200 with which a manual coffee machine is provided, with or without an integrated grinder thereof; the filter holder 200 allows and ensures the connection with the brewing section of the coffee machine.

An amount of coffee powder is dispensed from the coffee grinder into the filter 100 which is then pressed with a third means, not illustrated in the drawings.

After the pressing process, the user verifies the correct amount of pressed coffee powder inside the filter 100, comparing the level of the coffee with the marks 105 on the inner surface of the filter 100.

If the amount of coffee powder is higher than the marks 105 (the marks are not visible) the user uses the tool 1 to adjust the amount of powdered material to remove the excess amount.

The user introduces the tool 1 into the filter 10 with vertical movement and then implements a first rotation (typically clockwise) of the tool 1 through the first ring nut 22 around the vertical axis Y.

The first blade 11 and the second blade 12 rotate together; the position of the second blade 12 ensures the opening of the transfer passage 30.

The first blade 11 interferes with the coffee powder so as to pick up through the transfer passage 30 the excess of powdered material and to transfer towards the storage reservoir 31 at least most of the excess of powdered material picked up. When in the vertical movement of the tool 1 the shoulder 20a of the side wall 20 abuts the peripheral edge 101 of the filter 100, the first blade 11 consequently reaches the height of the coffee powder in the filter 100 which has been envisaged and corrected for the optimal infusion of a coffee.

The user then implements a second rotation in the opposite direction to the previous one (typically counter-clockwise) of the second ring nut 23 which, through the control, connection and rotation means, rotates the second blade 12 around the vertical axis Y in a rotation direction opposite the previous one so that the second blade 12 closes the transfer passage 30, and in the movement drags and transfers any residual part of the excess of powdered material to the storage reservoir 30 which the first blade 11 has picked up but not transferred to the storage reservoir 30.

The angular excursion of the second blade 12 can be limited by special end-stroke means, for example a tooth 12a of the second blade 12 can be slidably engaged in an arcuate slot 120 closed at both the ends thereof obtained in the lower wall 10 of the tool 1.

Advantageously, the storage reservoir 30 being inside the hollow body, typically open at the top, the user can easily transfer the excess amount of coffee powder thus collected by removing the tool 1 from the filter 100 and transferring it to another vessel with a simple manual pouring.

It has been found in practice that a tool for adjusting the amount of powdered material contained in a vessel according to the invention is particularly advantageous to be able to remove the excess coffee powder.

A further advantage of a tool for adjusting the amount of powdered material contained in a vessel according to the invention is to be able to retain the excess coffee powder, and to be simple and effective.

A tool for adjusting the amount of powdered material contained in a vessel as conceived herein is susceptible to numerous modifications and variants, all falling within the scope of the invention, as defined in the appended claims.

For example, the lower wall 10, in the illustrated solution, is positioned at a fixed predetermined height inside the vessel 100; however, it is also possible to position it at an adjustable predetermined height, for example by providing a telescopic structure of the tool through which the lower wall 10 can change the distance from the resting point of the tool on the vessel 100.

In practice, the materials used, as well as the dimensions, can be any according to the needs and the state of the art.

## Claims

1. A tool (1) for adjusting the amount of powdered material contained in a vessel (100), **characterized in that** it comprises an storage reservoir (31) of an excess of powdered material (301) contained in said vessel (100), a lower wall (10) configured to be positioned inside said vessel (100), a side wall (20) configured to rotatably support said tool (1) resting on a peripheral edge (101) of said vessel (100) and to position said lower wall (10) at a fixed or adjustable predetermined height inside said vessel (100), said lower wall (10) having at least a first blade (11) configured to pick up said excess of powdered material and at least one transfer passage (30) for transferring at least most of said excess of powdered material picked up from said first blade (11) towards said storage reservoir (31).

2. The tool (1) for adjusting the amount of powdered material according to claim 1, **characterized in that** said lower wall (10) is circular and is configured to match with a cylindrical peripheral wall (103) of said vessel (100).

3. The tool (1) for adjusting the amount of powdered material according to any preceding claim, **characterized in that** said transfer passage (30) is delimited by the cutting edge of said first blade (11).

4. The tool (1) for adjusting the amount of powdered material according to any one of claims 2 and 3, **characterized in that** said first blade (11) extends radially.

5. The tool (1) for adjusting the amount of powdered material according to any preceding claim, **characterized in that** said storage reservoir (31) is configured inside a single hollow body defined at least by said side wall (20) and said lower wall (10) having said first blade (11) and said transfer passage (30).

6. The tool (1) for adjusting the amount of powdered material according to any preceding claim, **characterized in that** it has a second blade (12) movable with respect to said first blade (11) and configured to transfer to said storage reservoir (31) any residual part of said excess of powdered material (301) picked up from said first blade (11) which has not been transferred to said storage reservoir (31).

7. The tool (1) for adjusting the amount of powdered material according to claim 6, **characterized in that** said second blade (12) is movable from and towards said first blade (11).

8. The tool (1) for adjusting the amount of powdered material according to any one of claims 6 and 7, **characterized in that** said second blade (12) is configured to open and close said transfer passage (30).

9. The tool (1) for adjusting the amount of powdered material according to any one of claims 6 to 8, **characterized in that** said first blade (11) and said second blade (12) are coplanar.

10. The tool (1) for adjusting the amount of powdered material according to the preceding claim, **characterized in that** said lower wall (10) has a lowered zone (10a) configured to accommodate said second blade (12).

11. The tool (1) for adjusting the amount of powdered material according to any one of claims 6 to 10, **characterized in that** said second blade (12) is rotatable with respect to said first blade (11) around a central vertical axis Y of said tool (1).

12. A filter holder with filter (100) for a coffee machine, in combination with a tool (1) according to any preceding claim for adjusting the amount of coffee powder contained in said filter (100).

13. A method for adjusting the amount of coffee powder contained in a filter (100) housed in a filter holder connectable to an infusion unit of a coffee machine, **characterized in that** it comprises the following steps:
- dispensing an amount of coffee powder into the filter (100)
- pressing the coffee powder contained in the filter (100)
- introducing into the filter a tool (1) according to any one of claims 1 to 11
- rotating said tool (1) so as to pick up said excess of powdered material and transfer at least most of said excess of powdered material picked up towards said storage reservoir (31).

14. The method according to the preceding claim, performed with a tool according to any one of claims 6 to 11, **characterized in that** it performs a first joint rotation of said first blade (11) and said second blade (12) around a central vertical axis (Y) of said tool (1) so that said first blade (11) picks up said excess of powdered material and transfers at least most of said excess of powdered material picked up towards said storage reservoir (31), and a second rotation singly of said second blade (12) around said central vertical axis (Y) but in a rotation direction opposite the previous direction so that said second blade (12) transfers to said storage reservoir (31) any residual part of said excess of powdered material which said first blade (11) has picked up but not transferred to said storage reservoir (31).

## Patentansprüche

1. Ein Werkzeug (1) zur Einstellung der Menge an Pulvermaterial in einem Behälter (100), **gekennzeichnet durch** einen Speicherkessel (31) mit überschüssigem Pulvermaterial (301) im Inneren des genannten Behälters (100), eine untere Wand (10), die so konfiguriert ist, dass sie im Inneren des genannten Behälters (100) positioniert werden kann, eine Seitenwand (20), die so konfiguriert ist, dass sie das Werkzeug (1) drehbar an einem peripheren Rand (101) des genannten Behälters (100) unterstützt und die untere Wand (10) auf eine feste oder verstellbare vorher festgelegte Höhe im Inneren des Behälters (100) positioniert, wobei die untere Wand (10) mindestens eine erste Klinge (11) hat, die so konfiguriert ist, dass sie das überschüssige Pulvermaterial aufnimmt, und mindestens einen Transferkanal (30) zum Übertragen von mindestens dem Großteil des von der ersten Klinge (11) aufgenommenen überschüssigen Pulvermaterials in den Speicherkessel (31).

2. Das Werkzeug (1) zur Einstellung der Menge an Pulvermaterial gemäß Anspruch 1, **gekennzeichnet dadurch, dass** die untere Wand (10) rund ist und so konfiguriert ist, dass sie mit einer zylindrischen Umfangswand (103) des genannten Behälters (100) übereinstimmt.

3. Das Werkzeug (1) zur Einstellung der Menge an Pulvermaterial gemäß einem der vorherigen Ansprüche, **gekennzeichnet dadurch, dass** der Transferkanal (30) durch die Schneide der ersten Klinge (11) begrenzt wird.

4. Das Werkzeug (1) zur Einstellung der Menge an Pulvermaterial gemäß einem der Ansprüche 2 und 3, **gekennzeichnet dadurch, dass** die erste Klinge (11) radial verläuft.

5. Das Werkzeug (1) zur Einstellung der Menge an Pulvermaterial gemäß einem der vorherigen Ansprüche, **gekennzeichnet dadurch, dass** der Speicherkessel (31) innerhalb eines einzigen Hohlkörpers konfiguriert ist, der mindestens durch die Seitenwand (20) und die untere Wand (10) definiert ist, wobei die erste Klinge (11) und der Transferkanal (30) vorhanden sind.

6. Das Werkzeug (1) zur Einstellung der Menge an Pulvermaterial gemäß einem der vorherigen Ansprüche, **gekennzeichnet dadurch, dass** es eine zweite Klinge (12) hat, die sich in Bezug auf die erste Klinge (11) bewegen lässt und so konfiguriert ist, dass sie jeden verbleibenden Teil des überschüssigen Pulvermaterials (301), der von der ersten Klinge (11) aufgenommen wurde und nicht in den Speicherkessel (31) übertragen wurde, in den Speicherkessel (31) überträgt.

7. Das Werkzeug (1) zur Einstellung der Menge an Pulvermaterial gemäß Anspruch 6, **gekennzeichnet dadurch, dass** die zweite Klinge (12) von und zu der ersten Klinge (11) beweglich ist.

8. Das Werkzeug (1) zur Einstellung der Menge an Pulvermaterial gemäß einem der Ansprüche 6 und 7, **gekennzeichnet dadurch, dass** die zweite Klinge (12) so konfiguriert ist, dass sie den Transferkanal (30) öffnen und schließen kann.

9. Das Werkzeug (1) zur Einstellung der Menge an Pulvermaterial gemäß einem der Ansprüche 6 bis 8, **gekennzeichnet dadurch, dass** die erste Klinge (11) und die zweite Klinge (12) coplanar sind.

10. Das Werkzeug (1) zur Einstellung der Menge an Pulvermaterial gemäß dem vorherigen Anspruch, **gekennzeichnet dadurch, dass** die untere Wand (10) eine abgesenkte Zone (10a) hat, die so konfiguriert ist, dass sie die zweite Klinge (12) aufnehmen kann.

11. Das Werkzeug (1) zur Einstellung der Menge an Pulvermaterial gemäß einem der Ansprüche 6 bis 10, **gekennzeichnet dadurch, dass** die zweite Klinge (12) um eine zentrale vertikale Achse Y des Werkzeugs (1) in Bezug auf die erste Klinge (11) drehbar ist.

12. Ein Filterhalter mit Filter (100) für eine Kaffeemaschine, in Kombination mit einem Werkzeug (1) gemäß einem der vorherigen Ansprüche zur Einstellung der Menge an Kaffeepulver, die in dem Filter (100) enthalten ist.

13. Ein Verfahren zur Einstellung der Menge an Kaffeepulver, das in einem Filter (100) in einem Filterhalter enthalten ist und mit einer Infusionseinheit einer Kaffeemaschine verbindbar ist, **gekennzeichnet durch** folgende Schritte: - Dosieren einer Menge Kaffeepulver in den Filter (100) - Verdichten des im Filter (100) enthaltenen Kaffeepulvers - Einführen eines Werkzeugs (1) gemäß einem der Ansprüche 1 bis 11 in den Filter - Drehen des Werkzeugs (1), um das überschüssige Pulvermaterial aufzunehmen und zumindest den Großteil des aufgenommenen überschüssigen Pulvermaterials in den Speicherkessel (31) zu übertragen.

14. Das Verfahren gemäß dem vorherigen Anspruch, durchgeführt mit einem Werkzeug gemäß einem der Ansprüche 6 bis 11, **gekennzeichnet dadurch, dass** es eine erste gemeinsame Drehung der ersten Klinge (11) und der zweiten Klinge (12) um eine zentrale vertikale Achse (Y) des Werkzeugs (1) ausführt, sodass die erste Klinge (11) das überschüssige Pulvermaterial aufnimmt und zumindest den Großteil des aufgenommenen überschüssigen Pulvermaterials in den Speicherkessel (31) überträgt, und eine zweite Einzeldrehung der zweiten Klinge (12) um dieselbe zentrale vertikale Achse (Y), jedoch in entgegengesetzter Drehrichtung zur vorherigen Richtung, sodass die zweite Klinge (12) jeden verbleibenden Teil des überschüssigen Pulvermaterials in den Speicherkessel (31) überträgt, den die erste Klinge (11) aufgenommen hat, aber nicht in den Speicherkessel (31) übertragen hat.

## Revendications

1. Un outil (1) pour ajuster la quantité de matériau en poudre contenue dans un récipient (100), **caractérisé en ce qu'**il comprend un réservoir de stockage (31) d'un excès de matériau en poudre (301) contenu dans ledit récipient (100), une paroi inférieure (10) conçue pour être positionnée à l'intérieur dudit récipient (100), une paroi latérale (20) conçue pour supporter de manière rotative ledit outil (1) reposant sur un bord périphérique (101) dudit récipient (100) et pour positionner ladite paroi inférieure (10) à une hauteur prédéterminée fixe ou réglable à l'intérieur dudit récipient (100), ladite paroi inférieure (10) ayant au moins une première lame (11) conçue pour ramasser ledit excès de matériau en poudre et au moins un passage de transfert (30) pour transférer au moins la majeure partie dudit excès de matériau en poudre ramassé depuis ladite première lame (11) vers ledit réservoir de stockage (31).

2. L'outil (1) pour ajuster la quantité de matériau en poudre selon la revendication 1, **caractérisé en ce que** ladite paroi inférieure (10) est circulaire et est conçue pour correspondre à une paroi périphérique cylindrique (103) dudit récipient (100).

3. L'outil (1) pour ajuster la quantité de matériau en poudre selon l'une quelconque des revendications précédentes, **caractérisé en ce que** ledit passage de transfert (30) est délimité par le bord de coupe de ladite première lame (11).

4. L'outil (1) pour ajuster la quantité de matériau en poudre selon l'une quelconque des revendications 2 et 3, **caractérisé en ce que** ladite première lame (11) s'étend radialement.

5. L'outil (1) pour ajuster la quantité de matériau en poudre selon l'une quelconque des revendications précédentes, **caractérisé en ce que** ledit réservoir de stockage (31) est configuré à l'intérieur d'un seul corps creux défini au moins par ladite paroi latérale (20) et ladite paroi inférieure (10) ayant ladite première lame (11) et ledit passage de transfert (30).

6. L'outil (1) pour ajuster la quantité de matériau en poudre selon l'une quelconque des revendications précédentes, **caractérisé en ce qu'**il comporte une deuxième lame (12) mobile par rapport à ladite première lame (11) et configurée pour transférer dans ledit réservoir de stockage (31) toute partie résiduelle dudit excès de matériau en poudre (301) prélevée sur ladite première lame (11) qui n'a pas été transférée dans ledit réservoir de stockage (31).

7. L'outil (1) pour ajuster la quantité de matériau en poudre selon la revendication 6, **caractérisé en ce que** ladite deuxième lame (12) est mobile de et vers ladite première lame (11).

8. L'outil (1) pour ajuster la quantité de matériau en poudre selon l'une quelconque des revendications 6 et 7, **caractérisé en ce que** ladite deuxième lame (12) est configurée pour ouvrir et fermer ledit passage de transfert (30).

9. L'outil (1) pour ajuster la quantité de matériau en poudre selon l'une quelconque des revendications 6 à 8, **caractérisé en ce que** ladite première lame (11) et ladite deuxième lame (12) sont coplanaires.

10. L'outil (1) pour ajuster la quantité de matériau en poudre selon la revendication précédente, **caractérisé en ce que** ladite paroi inférieure (10) comporte une zone abaissée (10a) configurée pour accueillir ladite deuxième lame (12).

11. L'outil (1) pour ajuster la quantité de matériau en poudre selon l'une quelconque des revendications 6 à 10, **caractérisé en ce que** ladite deuxième lame (12) est rotative par rapport à ladite première lame (11) autour d'un axe vertical central Y dudit outil (1).

12. Un porte-filtre avec filtre (100) pour une machine à café, en combinaison avec un outil (1) selon l'une quelconque des revendications précédentes pour ajuster la quantité de poudre de café contenue dans ledit filtre (100).

13. Un procédé pour ajuster la quantité de poudre de café contenue dans un filtre (100) logé dans un porte-filtre pouvant être connecté à une unité d'infusion d'une machine à café, **caractérisé en ce qu'**il comprend les étapes suivantes :
- distribuer une quantité de poudre de café dans le filtre (100)
- comprimer la poudre de café contenue dans le filtre (100)
- introduire dans le filtre un outil (1) selon l'une quelconque des revendications 1 à 11 - faire tourner ledit outil (1) afin de prélever ledit excès de matériau en poudre et de transférer au moins la majeure partie dudit excès de matériau en poudre prélevé vers ledit réservoir de stockage (31).

14. Le procédé selon la revendication précédente, réalisé avec un outil selon l'une quelconque des revendications 6 à 11, **caractérisé en ce qu'**il effectue une première rotation conjointe de ladite première lame (11) et de ladite deuxième lame (12) autour d'un axe vertical central (Y) dudit outil (1) de telle sorte que ladite première lame (11) prélève ledit excès de matériau en poudre et transfère au moins la majeure partie dudit excès de matériau en poudre prélevé vers ledit réservoir de stockage (31), et une seconde rotation individuelle de ladite deuxième lame (12) autour dudit axe vertical central (Y) mais dans une direction de rotation opposée à la direction précédente de telle sorte que ladite deuxième lame (12) transfère vers ledit réservoir de stockage (31) toute partie résiduelle dudit excès de matériau en poudre que ladite première lame (11) a prélevée mais n'a pas transférée vers ledit réservoir de stockage (31).
